# EUROPEAN PATENT SPECIFICATION

(11) **EP 3 566 273 B1**
(45) Date of publication and mention of the grant of the patent: **10.08.2022**
(21) Application number: 18709714.2
(22) Date of filing: 03.01.2018
(51) Int. Cl.: H02G 3/06, H02G 3/08

(54) **AN IMPROVED ELECTRICAL JUNCTION BOX**
VERBESSERTER ELEKTRISCHER ANSCHLUSSKASTEN
BOÎTE DE JONCTION ÉLECTRIQUE AMÉLIORÉE

(30) Priority: 04.01.2017 GB 201700088
(43) Date of publication of application: 13.11.2019
(73) Proprietor: Connexbox Ltd, Ely, Cambridgeshire CB6 2HY (GB)
(72) Inventor: BREWER, Raymond, Ely Cambridgeshire CB6 2HY (GB)
(74) Representative: Tolfree, Adam Joseph Benjamin
(86) International application number: PCT/GB2018/050005
(87) International publication number: WO 2018/127690

(56) References cited:
- WO-A1-2014/180993
- DE-A1- 2 550 939
- GB-A- 2 462 595
- US-A1- 2011 139 483
- US-A1- 2016 170 164
- US-B1- 6 265 670
- US-B1- 6 325 671

## Description

The present invention relates to an electrical junction box.

Current United Kingdom Institution of Electrical Engineers (IEE) regulations require that electrical terminals shall not be subject to undue stress, through for example, taking the weight of cables or fittings. Such regulations are likely to become more widespread over time.

DE2550939A1, US2016/170164A1, WO204/180993A1 and US6265670B1 are examples of prior art junction boxes.

GB2462595 describes a gripping mechanism for an electrical junction box that includes a tooth arranged to extend into the inlet to grip a cable against an opposing wall of the inlet.

The present invention provides improvements over the junction box of GB2462595. According to the invention there is provided a junction box according to claim 1. Multiple retaining elements may be held in a single recess with at least one of the retaining elements held within the recess directly against another of the retaining elements.

This allows the spacing between the retaining element and retaining surface to be altered to retain, e.g. grip, cables of different gauges using only a single slot and therefore allows the space saved, as compared with the design of GB2462595, to be used for holding a further retaining element to augment grip or for use in a further, adjacent, inlet.

The enclosure may comprise a detent arrangement arranged to hold the retaining member in the recess at separate/discrete positions. The retaining element may be moved between these separate discrete positions depending upon the desired separation, the retaining element being retained by the detent arrangement against the opposing force of the squeezed cable.

The recess may be profiled to define one or more detents. Similarly the retaining element may be profiled to define one or more detents. The retaining element and recess may have corresponding profiles that interlock when the retaining element is seated within the recess. There are a wide variety of ways in which the detents may be formed. Non limiting examples include providing a toothed surface, a curved surface, e.g. a wavy surface, a regular or irregular arrangement of protrusions spaced along a slot recess, or a regular or irregular arrangement of transverse recesses that are spaced from one another along a slot recess.

Favourably the retaining element is repositionable within the recess in order that the spacing between the retaining element and the retaining surface may be changed.

Favourably the cable is gripped between the retaining element and the retaining surface through an interference fit.

The retaining element holder and retaining surface may be arranged substantially at the inlet of the enclosure. The enclosure may comprise sides and a lid, and therebetween a cavity for holding an electrical connector. The lid, when the enclosure is closed, may close off a side of the recess.

The retaining mechanism may include a channel through which the cable can extend to be retained; the retaining surface defining, at least in part, a first side of the channel. The retaining element may extend into the channel to urge the cable against the retaining surface.

The retaining element holder may be arranged between two channels, and include a first retaining element to extend into a first channel on a first side of the retaining element holder, and a second recess for holding a second retaining element that extends into a second channel on a second side of the retaining element holder.

A side of the enclosure may include two slots that provide the inlets. The slots may extend to a free edge of the side when a lid of the enclosure is open; the slots being separated by separating portion provided at least in part by the side, the separating portion may have a recess that faces the lid when the lid is closed; the lid may include a projection, that when the lid is closed, is received in the recess of the separating portion. This arrangement helps to retain the separating portion in position and alignment in order to ensure that all stacked cables are secured.

The projection may be semi-cylindrical. This allows the projection to ease into the recess when the two are out of alignment. It will be appreciated that the projection may take other shapes that provide a similar function.

The enclosure is preferably arranged such that the separating portion also provides the retaining element holder.

The separating portion may comprise a second recess, the recesses of the separating portion being positioned on either side of the retaining element recess or where there are multiple retaining elements recess in each separating portion, on either side the group of retaining element recesses.

The inventions will now be described by example with reference to the following figures in which:

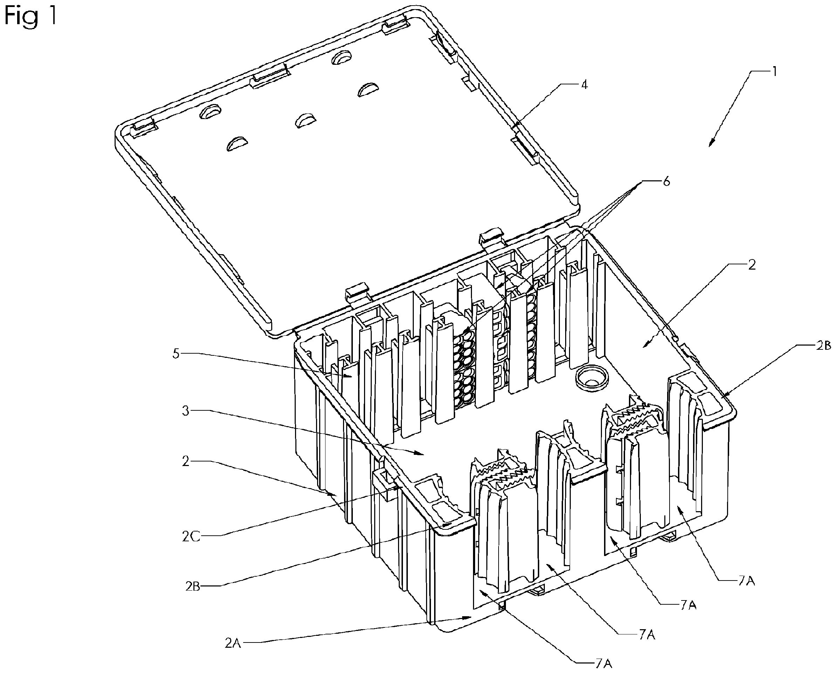

**Figure 1** is a perspective view of a junction box from a first side with lid open;
**Figure 2A** is a plan view of the junction box;
**Figure 2B** is a plan view similar to Fig 2A showing in close up the channels with the retaining elements positioned to provide different spacings;
**Figure 3** is a perspective view of the junction box from the other side relative Fig 1 with a segmented retaining element ready for insertion;
**Figure 4** is a perspective front view showing stacked cable of different sizes extending through a channel in the box;
**Figure 5** is a plan view of the front portion of the box arrangement of Fig 4;
**Figure 6** is a side front view cutaway through line A-A of Figure 2;
**Figure 7** is a side cross section through line B-B of Fig 2 shown with lid closed and
retaining members absent; and
**Figure 8** is a side cross section through line C-C of Fig 2 shown with lid closed and retaining members absent.

With reference to the Figures there is shown an enclosure formed as an electrical junction box 1 having sides 2, a base 3 and a lid 4 that between them define an interior space holding an internal structure 5 for retaining one or more electrical connectors 6. The presence of the internal structure 5 is not essential to the present invention and so will not be described further.

One side 2A of the box 1 has four openings 7. Each opening 7 takes the form of a vertical slot in side 2A extending to a free face 2B of the box 1. Each opening 7 forms the entrance of an inlet channel 7A that extends into the box 1 and is arranged to receive one or more electrical cables 20 for electrical connection via electrical connectors 6.

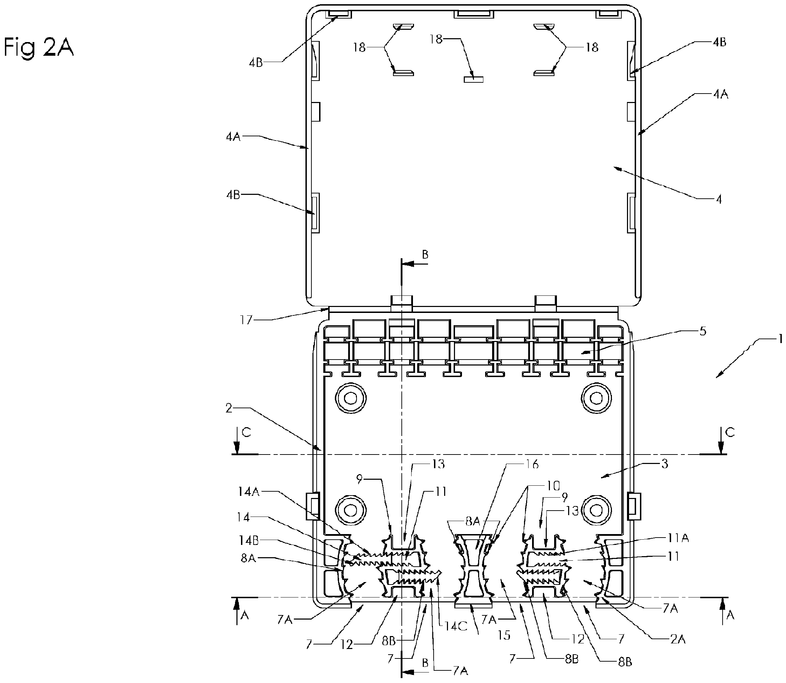

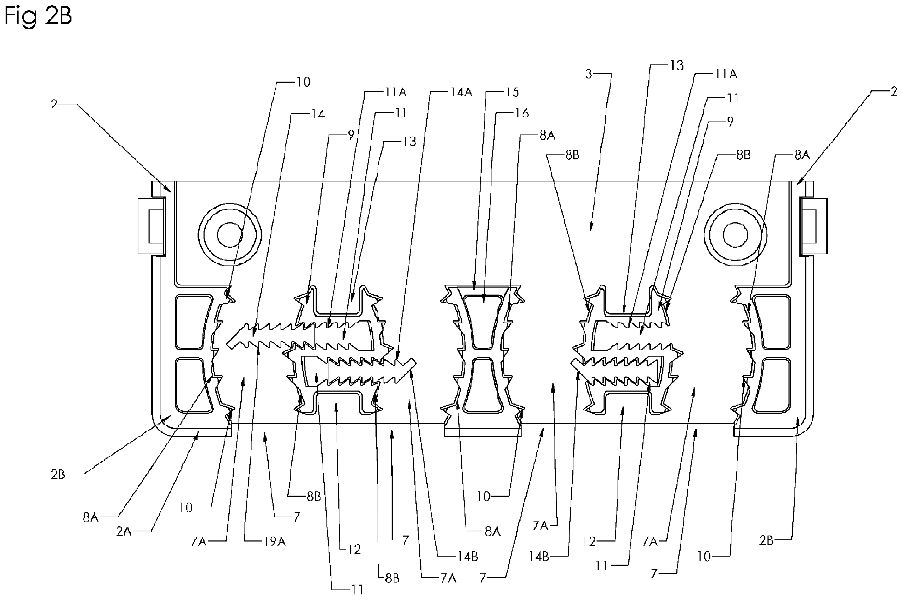

A first side of each channel 7A provides a retaining surface 8A. As seen best in Fig 2, the retaining surface 8A is concavely curved in the longitudinal direction of the channel 7A.

According to an example not according to the claimed invention, arranged opposite each retaining surface 8A is a retaining element block 9 that defines the opposing side of the channel 7A including a convexly curved surface 8B. Both the retaining surface 8A and convexly curved surface 8B are provided with sets of teeth 10 that extend into the channel 7A. The teeth 10 are spaced along the channel 7A and arranged to extend away into the channel 7A at various angles away from 90° from the plane of the surface 8A taken at the position from which each tooth extends from the surface. Some teeth 10 are arranged to point towards the opening 7 others towards the interior of the box 1.

The retaining blocks 9 include slots 11, and recesses 12, 13. Each slot 11 extends through surface 8B extending laterally from its respective channel 7A. The slots 11 are profiled to define toothed surfaces 11A. Each slot 11 is arranged to hold a retaining element (gripper) 14. The retaining element 14 includes a base portion having a toothed surface 14A to inter-fit with the toothed surface 11A of the slot 11. The retaining element 14 also includes a blade-like portion 14B angled away from the primary plane of the base of the retaining element 14. Through a detent mechanism provided through the inter-fit of the toothed surfaces 11A 14A of the slots 11 and retaining element 14, the retaining element 14 can be retained in various discrete positions within the slot 11 in order to vary the spacing between the tip of the blade-like portion 14B and the retaining surface 8A.

Fig 2B illustrates three of various possible positions in which the retaining elements 14 can be held within the recesses 11: the far left retaining element is shown extended to hold a narrow gauge cable, centre left to hold a medium gauge cable and centre right to hold a wide gauge cable. In the far right channel 7A the retaining member 14 is absent in order for holding a cable that is slightly wider than the channel 7A. It will be appreciated that the retaining elements 14 may be held in positions other than those shown.

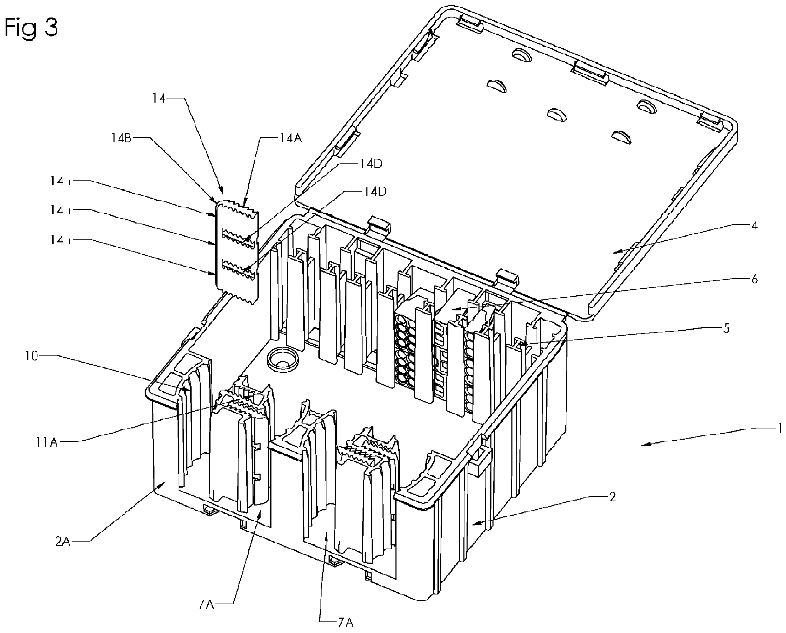

According to an example not according to the claimed invention, as can be seen in Fig 3, the retaining element 14 is comprised of segments 14', in this particular example three segments, each having a base portion with teeth 14A' and blade 14B'. Each segment 14' is substantially identical, joined through connecting portion 14D to allow one or more of the segments 14' to be separated to form an individual retaining element. The connecting portions 14D are formed without a toothed surface and as such may be of a reduced thickness and/or frangible compared to the toothed base sections 14A'. Because the connecting portions do not have a toothed surface, there is less likelihood of unwanted deformation of segment around the cutting line during separation of the individual retaining elements, i.e. they can be cut to provide a cleaner edge to each retaining element. This helps to ease the passage of the divided retaining elements 14' in the recess 11 and inhibit jamming.

The recesses 12 are arranged on an outer side of slots 11; recesses 13 are arranged on an inner side of the slots 11. The recesses 12, 13 are arranged to open into face 2B.

In order to provide the four channels 7A of the described embodiment, the box 1 comprises two retaining blocks 9 and a central member 15 positioned there between that defines two of the retaining surfaces 8A. The central member 15 includes a recess 16 that opens to free edge 2B.

The lid 4 is mounted to a side 2 of the box via a living hinge 17. The hinge 17 is provided on the side directly opposite the opening 7. The lid 4 has a rim 4A that includes a number of tabs 4B spaced around the rim 4A. The lid 4 carries a number of semi-cylindric projections 18 spaced inwards of rim 4A of the lid 4 such as to align with recess 12, 13 and 16. Adjacent hinge 17 are pairs of in-register hooks 19 and apertures 20 provided by the lid 4 and side wall 2 respectively.

The base 3 of the enclosure 1 defines one or more slots 3A that provide a mounting point for the box 3.

The enclosure 1 is formed from a single integral piece of moulded synthetic plastic material such as for example, polypropylene, which defines the sides 2, base 3 the sides 8A 8B of channels 7A.

When used to hold one cable within a channel 7A, the position of the retaining element 14 within the slot 11 is selected, repositioning the element 14 if necessary, in order to provide a separation between the blade 14B and the retaining surface 8A that is slightly smaller than the gauge of the cable. The cable for connection to a connector 6, or having already been connected to a connector 6, is pushed down (though possibly could be fed through) into the selected channel 7A. The base 3 of the box 1 can be flexed to widen the channel 7A to ease this process. Once the flexing force is released, the box 1 returns towards its original shape, and cable 20 becomes gripped between the retaining element 14 and the retaining surface 8A; the former being held in position within the slot 11 through the inter-fit of the teeth 11A, 14B. The portion of the cable lying within channel 7A tends to adopt and rest against the curve of the retaining surface 8A, teeth 10 additionally gripping the cable 20. Multiple cables of the same gauge can be retained within the same channel 7A, stacked one atop the other, each held between the retaining element 14 and retaining surface 8A.

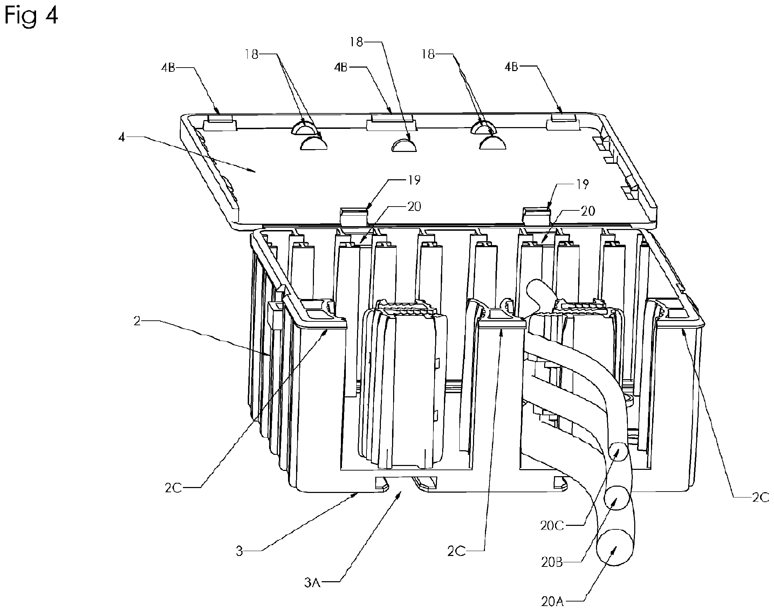

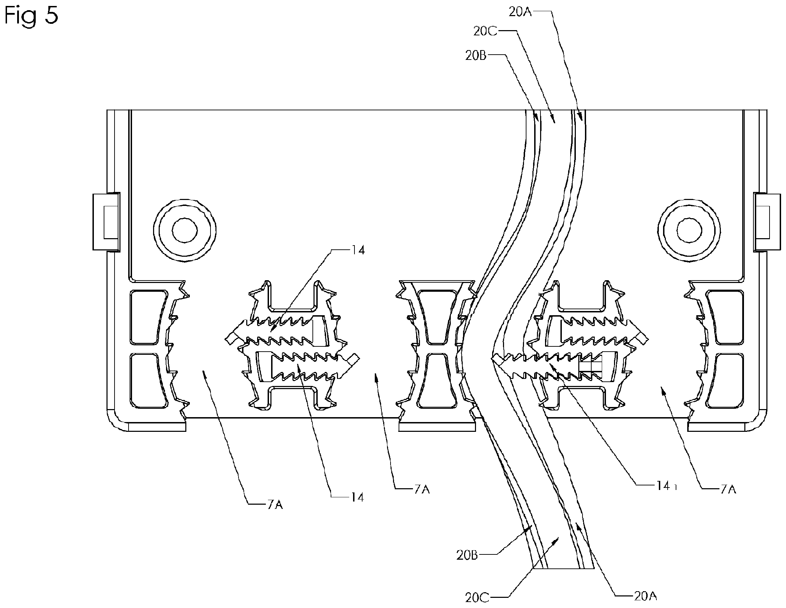

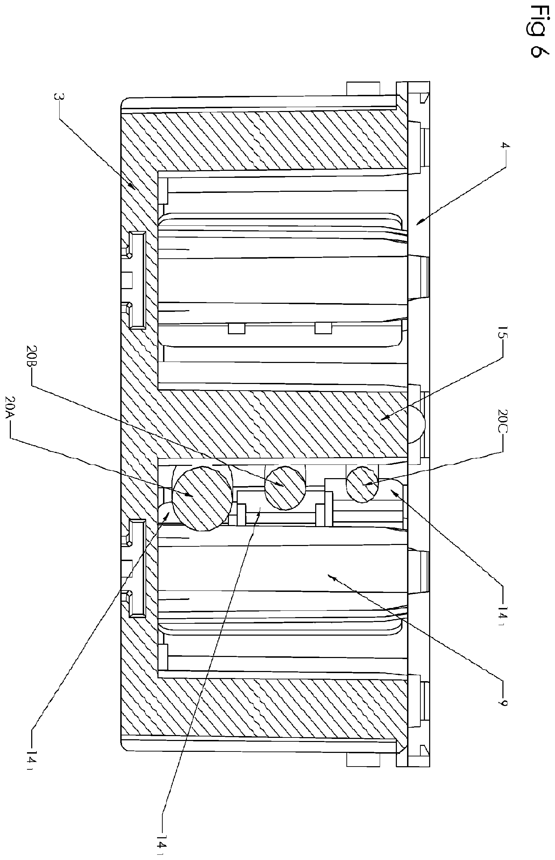

According to the invention as defined in the claims, to retain multiple stacked cables 20A, 20B, 20C of different gauges, as illustrated in Figs 4, 5 and 6, the retaining element 14 is fractured about connections 14D to provide multiple retaining elements in which at least one is provided through a segment 14'. In this instances, as there are three cables, the retaining element 14 is divided twice about connections 14D to form three divided retaining elements 14' The retaining elements 14' are stacked within the slot 11 so as to be separated from the retaining surface 8A by different distances to correspond with different gauges of the cables to be gripped. The cables 20A, 20B, 20C are then stacked into the channel 7A in the order that corresponds with the spacing between the retaining elements 14' and the retaining surface 8A. As before, the box 1 can be flexed to temporary widen the channel 7A during insertion of the cables.

For cables having a gauge that is slightly wider than the channel width, no retaining element is required. The cable is instead gripped primarily between outer teeth of the retaining surface 8A and central tooth of opposing surface 8B.

Once the cables are retained in the channel 7A, the lid 4 of the box is closed about hinge 17 so as to lie against face 2B held in position through engagement of tabs 4B with underside of a lip 2C of sides 2. During closing of the lid 4, hooks 19 rotate to pass through apertures 20 in order to inhibit sliding of the lid 4 across the top of the box 1 as a result, for example, of unwanted lateral movement of hinge 17 or should the hinge 17 fail.

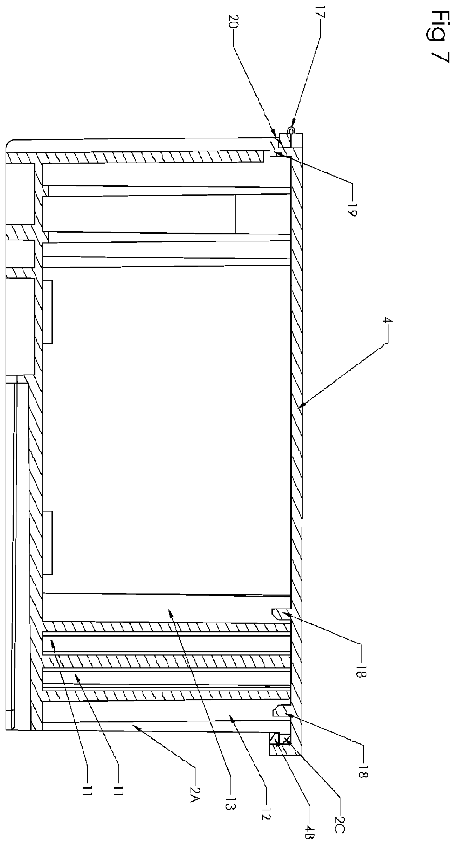

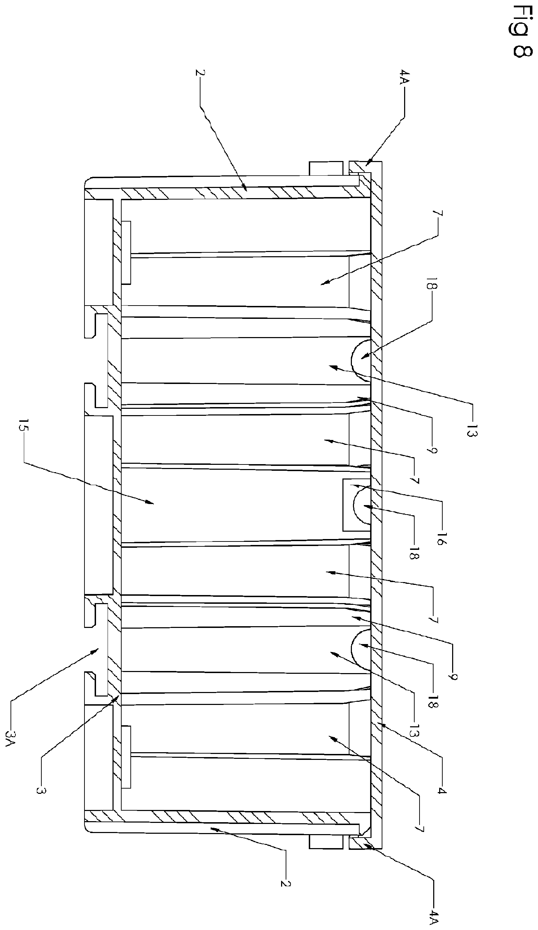

With reference to Figures 7 and 8 as the lid 4 closes, projections 18 are received in recesses 12, 13 and 16. The projections 18 are sized to be substantially the width of the recesses, and through their semi-cylindric shape act to urge upper portions of the channel 7A sides, which may have splayed apart as a result of force exerted through retaining the cables, back toward vertical. This ensures the uppermost cable, where the effect of splay is likely to widen the channel 7A to the greatest extent, is still held fast. Note: projections 18 are shown in Figs 7 & 8 as spaced from the walls of recesses 12, 13 and 16 for ease of comprehension; in actuality the projections 18 and walls of said recess 12, 13, 16 are preferably in contact.

The projections 18 may be other than semi-cylindric whilst still providing the 'wedging effect' to ease the spacer into vertical alignment.

Although the embodiment describes the retaining mechanism as forming part of the inlet, it will be appreciated that the retaining mechanism could be located elsewhere within, or possible outside of, the enclosure 1.

The enclosure 1 may be of any shape and there can be more or less than four openings. It will be appreciated, especially where the enclosure 1 defines only a single inlet, that the slot 11 may be defined by means other than a retaining block, e.g. in a side of the box.

The enclosure 1 need not comprises a hinge, or if comprising a hinge, it need not be of a living type.

Rather than a concave surface, the surface could be a different shape, e.g. convexly curved, with two retaining element either side of the apex of the curve to elicit the curve. A further alternative is that the retaining surface may include multiple curves or may elicit a surface through a castellated profile in which the cable is forced into the recess.

The enclosure 1 may be formed from materials other than synthetic plastic.

The enclosure 1 may include multiple retaining elements spaced in the direction of the channel to grip the cable at different points along the channel. For this purpose the enclosure may include more than one recess per channel.

The enclosure 1 described above favourably has channels sized between 8-15 mm, preferably around 12mm in order to retain round or flat cables of gauges up to around 15mm. Nevertheless, it is possible that the enclosure may scaled for other applications.

## Claims

1. A junction box (1) for holding an electrical cable connector; the junction box defining an inlet (7) for cables (20) and a retaining mechanism (8A, 14') comprising multiple retaining elements (14') and a retaining surface (8A), the multiple retaining elements (14') and retaining surface (8A) arranged for retaining there between the cables (20) extending through the inlet (7); the retaining mechanism (8A, 14') further comprising a retaining element holder (9) to hold the multiple divided retaining elements (14') in a stacked arrangement to hold multiple stacked cables (20) extending through the inlet (7); wherein
the retaining element (9) holder includes a recess for holding said retaining elements (14') stacked within the recess (11); **characterised in that**
the junction box comprises a detent arrangement arranged to hold at least one of the retaining elements (14') at separate discrete positions in the recess (11) to vary the separation of the at least one retaining elements (14') from the retaining surface (8A) so as to hold stacked cables (20) of different gauges.

2. A junction box according to claim 1 wherein the recess (11) is profiled (11A) to define one or more detents.

3. A junction box according to claim 1 or 2 wherein at least one of the retaining elements (14') is profiled (14A) to define one or more detents.

4. A junction box according to claim 2 wherein the recess (11) is profiled to define multiple detents spaced by different distances from the retaining surface (8A).

5. A junction box according to any claim 1 - 4 wherein the recess (11) and at least one of the retaining elements (14') have corresponding profiles that interlock when the retaining element (14') is seated within the recess (11).

6. A junction box according to any claim 1 - 5 wherein at least one of the retaining elements (14') is repositionable within the recess (11).

7. A junction box according to any previous claim wherein at least one of the retaining elements (14') is held within the recess (11) directly against another of the retaining elements (14').

8. A junction box according to any claim 1 - 7 wherein the retaining element holder (9) and retaining surface (8A) are arranged substantially at the inlet (7) of the junction box.

9. A junction box according any claim 1-8 wherein the enclosure comprises sides (2) and a lid (4), and there between a cavity for holding the electrical connector (6).

10. A junction box according to claim 9 wherein the lid (4), when the enclosure is closed, closes a side of the recess (11).

11. A junction box according to any previous claim wherein the retaining mechanism includes a channel (7A) through which the cable (20) can extend to be retained; the retaining surface (8A) defining, at least in part, a first side of the channel (7A).

12. A junction box according to claim 11 wherein the retaining elements (14') extend into the channel (7A) to urge the cable (2) against the retaining surface (8A).

## Patentansprüche

1. Eine Anschlussdose (1) für einen elektrischen Kabelanschluss. Die Anschlussdose definiert eine Durchführung (7) für Kabel (20) und einen Haltemechanismus (8A, 14') aus mehreren Halteelementen (14') und einer Haltefläche (8A), die so angeordnet ist, dass sie zwischen den Kabeln (20) steckt, die durch die Durchführung (7) reichen. Der Haltemechanismus (8A, 14') besteht außerdem aus einer Halteelementhalterung (9), um die verschiedenen getrennten Halterungen (14') gestapelt anzuordnen, um mehrere gestapelte Kabel (20) zu halten, die durch die Durchführung (7) reichen; wobei die Halteelementhalterung (9) eine Vertiefung aufweist, um die besagten Halteelemente (14') in der Vertiefung (11) gestapelt in der Vertiefung zu befestigen. Sie charakterisiert sich dadurch, dass die Anschlussdose aus einer Rastung besteht, die zumindest eines der Halteelemente (14') in der Vertiefung (11) an getrennten, diskreten Positionen befestigt, um die Trennung von mindestens einem Halteelement (14') von der Halteoberfläche (8A) zu unterscheiden, um gestapelte Kabel (20) unterschiedlicher Stärken zu halten.

2. Eine Anschlussdose gemäß Anspruch 1, wobei die Vertiefung (11) profiliert (11A) ist, um eine bzw. mehrere Rastungen zu definieren.

3. Eine Anschlussdose gemäß Anspruch 1 oder 2, wobei zumindest eines der Halteelemente (14') profiliert (14A) ist, um eine bzw. mehrere Rastungen zu definieren.

4. Eine Anschlussdose gemäß Anspruch 2, wobei die Vertiefung (11) profiliert ist, um mehrere Rastungen zu definieren, die in unterschiedlichen Abständen von der Halteoberfläche angeordnet sind (8A).

5. Eine Anschlussdose gemäß Anspruch 1 bis 4, wobei die Vertiefung (11) und mindestens eines der Halteelemente (14') übereinstimmende Profile aufweisen, die ineinandergreifen, wenn das Halteelement (14') in der Vertiefung (11) sitzt.

6. Eine Anschlussdose gemäß den Ansprüchen 1 bis 5, wobei zumindest eines der Halteelemente (14') in der Vertiefung (11) neu positioniert werden kann.

7. Eine Anschlussdose gemäß den vorherigen Ansprüchen, wobei zumindest eines der Halteelemente (14') in der Vertiefung (11) direkt gegen ein anderes Halteelement (14') gehalten wird.

8. Eine Anschlussdose gemäß den Ansprüchen 1 bis 7, wobei die Halteelementhalterung (9) und die Halteoberfläche (8A) im Wesentlichen an der Durchführung (7) der Anschlussdose angeordnet sind.

9. Eine Anschlussdose gemäß den Ansprüchen 1 bis 8, wobei das Gehäuse aus Seiten (2) und einem Deckel (4) besteht, und sich darin in Leerraum befindet, in dem sich der elektrische Anschluss (6) befindet.

10. Eine Anschlussdose gemäß Anspruch 9, wobei der Deckel (4) bei Verschließen des Gehäuses eine Seite der Vertiefung (11) schließt.

11. Eine Anschlussdose gemäß den vorherigen Ansprüchen, wobei der Haltemechanismus einen Kanal (7A) aufweist, durch den das Kabel (20) zum Befestigen gesteckt werden kann. Die Halteoberfläche (8A) definiert zumindest zum Teil eine erste Seite des Kanals (7A).

12. Eine Anschlussdose gemäß Anspruch 11, wobei die Halteelemente (14') in den Kanal (7A) reichen, um das Kabel (2) gegen die Halteoberfläche (8A) zu drücken.

## Revendications

1. Une boîte de dérivation (1) pour contenir un connecteur de câble électrique ; la boîte de dérivation étant **caractérisée par** une entrée (7) pour les câbles (20) et un mécanisme de retenue (8A, 14') comprenant plusieurs éléments de retenue (14') et une surface de retenue (8A), les multiples éléments de retenue (14') et la surface de retenue (8A) sont disposés de sorte à retenir à cet endroit, entre les câbles (20) jusqu'à l'entrée (7) ; le mécanisme de retenue (8A, 14') comprenant en outre un support d'éléments de retenue (9) pour maintenir les multiples éléments de retenue séparés (14') de manière empilée afin que plusieurs câbles restent empilés (20) jusqu'à l'entrée (7) ; dans laquelle le support d'éléments de retenue (9) comprend un évidement pour maintenir lesdits éléments de retenue (14') empilés à l'intérieur de l'évidement (11) ; **caractérisé par le fait que** la boîte de dérivation comprend un agencement de crans disposé de sorte à maintenir au moins l'un des éléments de retenue (14') dans des positions ponctuelles distinctes dans l'évidement (11) pour faire varier la séparation d'au moins un élément de retenue (14') de la surface de retenue (8A) de manière à maintenir des câbles empilés (20) de calibres différents.

2. Une boîte de dérivation selon la revendication 1, dans laquelle l'évidement (11) est profilé (11A) pour définir un ou plusieurs crans.

3. Une boîte de dérivation selon la revendication 1 ou 2, dans laquelle au moins l'un des éléments de retenue (14') est profilé (14A) pour définir un ou plusieurs crans.

4. Une boîte de dérivation selon la revendication 2, dans laquelle l'évidement (11) est profilé pour définir plusieurs crans espacés de distances différentes de la surface de retenue (8A).

5. Une boîte de dérivation selon l'une des revendications 1 à 4, dans laquelle l'évidement (11) et au moins l'un des éléments de retenue (14') ont des profils correspondants qui s'emboîtent lorsque l'élément de retenue (14') est logé dans l'évidement (11).

6. Une boîte de dérivation selon l'une des revendications 1 à 5, dans laquelle au moins l'un des éléments de retenue (14') peut être repositionné à l'intérieur de l'évidement (11).

7. Une boîte de dérivation selon l'une des revendications précédentes, dans laquelle au moins l'un des éléments de retenue (14') est maintenu à l'intérieur de l'évidement (11) directement contre l'un des autres éléments de retenue (14').

8. Une boîte de dérivation selon l'une des revendications 1 à 7, dans laquelle le support d'éléments de retenue (9) et la surface de retenue (8A) sont disposés pratiquement à l'entrée (7) de la boîte de dérivation.

9. Une boîte de dérivation selon l'une des revendications 1 à 8, dans laquelle le boîtier comprend des côtés (2) et un couvercle (4), et entre eux une cavité pour placer le connecteur électrique (6).

10. Une boîte de dérivation selon la revendication 9, dans laquelle le couvercle (4), lorsque le boîtier est fermé, ferme un côté de l'évidement (11).

11. Une boîte de dérivation selon l'une des revendications précédentes, dans laquelle le mécanisme de retenue comprend un canal (7A) à travers lequel le câble (20) peut s'étendre pour être retenu ; la surface de retenue (8A) constituant, au moins en partie, un premier côté du canal (7A).

12. Une boîte de dérivation selon la revendication 11, dans laquelle les éléments de retenue (14') s'étendent dans le canal (7A) pour pousser le câble (2) contre la surface de retenue (8A).
